(19) Europäisches Patentamt / European Patent Office / Office européen des brevets

(11) **EP 2 935 759 B1**

(12) **FASCICULE DE BREVET EUROPEEN**

(45) Date de publication et mention de la délivrance du brevet:
**26.04.2017 Bulletin 2017/17**

(21) Numéro de dépôt: **13818314.0**

(22) Date de dépôt: **16.12.2013**

(51) Int Cl.:
***E21B 19/16*** $^{(2006.01)}$

(86) Numéro de dépôt international:
**PCT/FR2013/053103**

(87) Numéro de publication internationale:
**WO 2014/096663 (26.06.2014 Gazette 2014/26)**

(54) **PROCEDE DE CONTROLE D'UN ETAT DE VISSAGE D'UN JOINT FILETE TUBULAIRE**

**VERFAHREN ZUR ÜBERPRÜFUNG DES VERSCHRAUBUNGSZUSTANDS EINES ROHRGEWINDEVERSCHLUSSES**

**METHOD FOR CHECKING A SCREWING STATE OF A TUBULAR THREADED SEAL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2012 FR 1262191**

(43) Date de publication de la demande:
**28.10.2015 Bulletin 2015/44**

(73) Titulaire: **VALLOUREC OIL AND GAS FRANCE**
**59620 Aulnoye-Aymeries (FR)**

(72) Inventeurs:
• **BREZIAT, Nicolas**
  **F-59300 Valenciennes (FR)**
• **COLIN, Sébastien**
  **F-59241 Masnières (FR)**
• **BRODIE, Alastair**
  **Aberdeenshire**
  **Aberdeenshire AB34 5HH (GB)**
• **PETIT, Sébastien**
  **59239 Thumeries (FR)**
• **QOZAM, Hanae**
  **59500 Douai (FR)**

(74) Mandataire: **de Kernier, Gabriel**
  **Cabinet Netter**
  **Conseils en Propriété Industrielle**
  **36, avenue Hoche**
  **75008 Paris (FR)**

(56) Documents cités:
| | |
|---|---|
| WO-A1-2008/029957 | JP-A- S63 298 054 |
| JP-A- 2010 197 273 | SU-A1- 905 778 |
| US-A- 4 870 866 | US-A1- 2005 256 676 |

## Description

La présente invention concerne un procédé de contrôle de l'assemblage d'un joint fileté tubulaire, notamment destiné à l'exploitation pétrolière ou gazière. Elle s'applique plus particulièrement mais non exclusivement à l'assemblage de joints filetés tubulaires dits « supérieurs » ou « premiums ».

De tels joints filetés tubulaires comprennent généralement un élément fileté mâle en extrémité d'un premier tube de grande longueur et un élément fileté femelle en extrémité d'un second tube qui peut être un tube de grande longueur ou un manchon. On parle dans le cas de l'assemblage de deux tubes de grande longueur de « joint intégral » et de joint « manchonné » dans le cas de l'assemblage de deux tubes par un manchon de raccordement.

Dans le cas particulier des joints filetés dits « supérieurs », les éléments filetés mâle et femelle comprennent chacun des portées d'étanchéité et des butées d'épaulement respectivement mâles et femelles destinées à coopérer lors de l'assemblage du joint.

Ces joints filetés sont notamment utilisés pour constituer des colonnes de cuvelage (« casings ») ou de production (« tubings ») ou des trains de tiges de forage pour des puits d'hydrocarbures ou pour des puits similaires tels que, par exemple, des puits pour la géothermie.

De tels types de tubes sont généralement assemblés verticalement, l'extrémité libre de la colonne en surface comportant un élément fileté femelle présentant un filetage intérieur femelle.

Pour pouvoir descendre la colonne dans le puits, on présente un nouveau tube au-dessus de la colonne muni d'un élément fileté mâle comportant un filetage extérieur mâle correspondant au filetage femelle en extrémité libre de la colonne, on engage le filetage mâle du nouveau tube dans le filetage femelle correspondant de la colonne et on visse le nouveau tube jusqu'à atteindre un niveau de couple de vissage prédéfini.

Ce niveau de couple de vissage prédéfini doit permettre au joint de respecter certains critères qui dépendent également des caractéristiques propres au joint. En particulier, il est important de s'assurer, dans le cas des joints dits supérieurs et comprenant donc des portées d'étanchéité, que le niveau de couple de vissage appliqué soit défini pour obtenir une pression de contact des portions d'étanchéité assurant une étanchéité suffisante du joint tout en évitant une plastification de ces portions.

Par conséquent, il est nécessaire de contrôler avec précision ce niveau de couple de vissage.

Il est déjà connu dans l'état de la technique, notamment du document JP 6-221475, un procédé de contrôle de l'état de vissage d'un joint fileté tubulaire dans lequel lors de l'opération de vissage, l'amplitude du couple en fonction du nombre de tours de vissage effectués est analysée. Comme cela est illustré sur la figure de ce document, la courbe présente trois parties caractéristiques correspondant à trois états de vissage du joint : la première partie correspond à un premier état de vissage au cours duquel se produit une interférence entre les filetages, la deuxième partie correspond à un deuxième état de vissage au cours duquel se produit une interférence entre les portées d'étanchéité et enfin la troisième partie correspond à un troisième état de vissage au cours duquel les butées des deux tubes filetés sont en contact et en compression. Bien entendu, dans l'art antérieur, d'autres profils existent et notamment il est possible d'avoir une courbe représentant la variation de l'amplitude en fonction du nombre de tours de vissage présentant seulement deux pentes distinctes et non trois. WO2008/029957 décrit un procédé de contrôle d'un état de vissage d'un joint fileté avec des moyens ultrasonores. Or, certains défauts présents sur les éléments filetés peuvent lors du vissage des éléments entre eux être à l'origine d'une élévation brutale du couple de vissage. Le procédé de l'art antérieur présente l'inconvénient que cette élévation du couple peut être interprétée de façon erronée comme correspondant à l'état de vissage de mise en compression des butées alors qu'en réalité le joint est toujours dans son premier état de vissage et n'est pas étanche. De la même façon, au contraire, des défauts peuvent également entraîner un profil de variation du couple tel que ce dernier n'est pas ou difficilement interprétable et le joint, bien que parfaitement vissé, risque d'être rejeté. Par conséquent, ceci présente des problèmes en termes de sécurité et de productivité sur les plateformes pétrolières.

Il existe donc un besoin pour un procédé de contrôle du vissage de deux éléments tubulaires filetés permettant de fournir un joint fileté étanche avec une grande fiabilité.

A cet effet, l'invention a pour objet un procédé de contrôle d'un état de vissage d'un joint fileté tubulaire, le joint fileté comprenant un élément tubulaire fileté mâle et un élément tubulaire fileté femelle, caractérisé en ce que, au cours du vissage de l'élément fileté mâle dans l'élément fileté femelle, on mesure une variation temporelle d'une caractéristique dimensionnelle de l'un au moins des éléments selon une direction prédéfinie et on analyse la variation temporelle de la caractéristique pour déterminer un état de vissage du joint fileté.

L'invention tire profit du fait que les éléments filetés subissent des déformations caractéristiques au cours du temps de vissage correspondant à des états de vissage particuliers du joint. Ainsi, par exemple lorsque l'élément mâle est vissé dans l'élément femelle, ce dernier subit tout d'abord une compression axiale correspondant à l'interférence des filetages et des portées d'étanchéité puis lorsque les butées viennent en contact, l'élément femelle subi une élongation selon la direction axiale qui augmente avec la compression des butées.

L'étude de ces déformations permet de définir une signature temporelle de déformation (élongation et/ou compression) de l'élément au cours du vissage selon la direction prédéfinie. Bien entendu, plusieurs signatures du même élément peuvent être définies selon plusieurs directions pour obtenir plus d'informations sur l'état de vissage du joint.

Ainsi, l'analyse de la variation temporelle, c'est-à-dire au cours du vissage du joint, de la caractéristique dimensionnelle de l'élément pris en considération, c'est-à-dire de la déformation, permet de déterminer un état de vissage du joint.

De préférence, on mesure cette caractéristique dimensionnelle au moyen d'un signal ultrasonore. Ce moyen de mesure présente l'avantage d'être non destructif.

De préférence, pour mesurer la caractéristique dimensionnelle, on émet le signal ultrasonore dans le corps de l'élément et on analyse la durée de propagation aller-retour de ce signal selon la direction prédéfinie. Du fait de la relation simple liant le temps de propagation d'un signal avec la distance, il est possible, en connaissant la vitesse de propagation de l'onde sonore dans le matériau en question, de déterminer aisément une caractéristique dimensionnelle du joint.

De préférence, on pilote l'arrêt du vissage du joint en fonction de la mesure de la caractéristique dimensionnelle. Ceci permet de prendre en compte l'état de vissage instantané du joint et non plus un état de vissage basé sur des résultats empiriques.

De préférence, on repère dans le profil de variation de la caractéristique dimensionnelle au moins une zone de changement de pente et on établit une correspondance entre cette zone et un état de vissage du joint fileté.

Par exemple, on établit une correspondance entre une zone de changement de pente et la mise en contact de deux parties fonctionnelles du joint telles que l'accostage des butées ou encore la mise en contact de surfaces d'étanchéité.

Un procédé selon l'invention peut en outre comporter l'une ou plusieurs des caractéristiques selon lesquelles :

- la caractéristique dimensionnelle représente une épaisseur dans une direction prédéfinie sensiblement radiale ou une longueur dans une direction prédéfinie sensiblement axiale de l'élément fileté ;
- la caractéristique dimensionnelle est mesurée dans une portion de l'élément fileté comprenant une portée d'étanchéité et/ou une butée d'épaulement ;
- la variation de la caractéristique dimensionnelle correspond à des allongements et/ou rétrécissements de l'élément selon la direction prédéfinie ;
- pour établir cette correspondance, on modélise un profil de variation par une méthode mathématique, par exemple la méthode des éléments finis et on compare le profil de variation mesuré avec le modèle de profil ;
- l'élément femelle appartient à un manchon de raccordement sensiblement symétrique de type femelle/femelle et l'élément mâle appartient à une extrémité d'un tube de grande longueur ou l'élément femelle et l'élément mâle appartiennent chacun à une extrémité d'un tube de grande longueur.

L'invention a en outre pour objet un procédé d'assemblage d'un joint, dans lequel on assemble par vissage un élément femelle et un élément mâle, caractérisé en ce qu'il met en oeuvre le procédé de contrôle selon l'invention.

De préférence, on pilote l'arrêt du vissage du joint en fonction de la mesure de la caractéristique dimensionnelle.

L'invention a encore pour objet un dispositif de contrôle d'un état de vissage d'un joint fileté tubulaire, le joint fileté comprenant un élément tubulaire fileté mâle et un élément tubulaire fileté femelle aptes à coopérer par vissage de l'élément femelle dans l'élément mâle, caractérisé en ce qu'il comprend des moyens de mesure d'une variation temporelle d'une caractéristique dimensionnelle de l'un au moins des éléments selon une direction prédéfinie et des moyens d'analyse de la variation temporelle de la caractéristique pour déterminer un état de vissage du joint fileté.

De préférence, le dispositif de contrôle comprend des moyens de pilotage de l'arrêt du vissage du joint en fonction de la mesure de la caractéristique dimensionnelle.

Cette caractéristique présente l'avantage de permettre un pilotage très précis du vissage du joint puisque basé sur des valeurs physiques réelles mesurées en instantanée et non plus un pilotage basé sur des valeurs empiriques.

Un dispositif selon l'invention peut en outre comporter la caractéristique selon laquelle les moyens de mesure comprennent au moins un transducteur ultrasonore.

L'invention a enfin pour objet un dispositif de guidage d'un premier élément tubulaire fileté lors de son raccordement par vissage avec un deuxième élément tubulaire fileté, comprenant une tête de préhension du premier élément tubulaire, caractérisé en ce que le dispositif comprend un logement pour des moyens de mesure d'une variation temporelle d'une caractéristique dimensionnelle du premier élément tubulaire agencés au moins partiellement dans la tête de préhension afin de permettre la mise en oeuvre du procédé de contrôle selon l'invention.

Un tel dispositif de guidage est désigné couramment par la terminologie anglo-saxonne « stabbing guide ». De façon classique, un tel dispositif permet un guidage des éléments tubulaires formant le joint dans le trou de l'installation d'exploitation pétrolière. L'avantage du dispositif de l'invention est de permettre une détermination rapide et simple de l'état de vissage du joint avec une grande simplicité d'installation.

Par exemple, les moyens de mesure sont logés dans la tête de préhension du « stabbing guide » ce qui permet une mise en position rapide et un maintien efficace des moyens de mesure sur le joint. Par ailleurs, ceci présente l'avantage de ne nécessiter aucun équipement supplémentaire pour former support des moyens de mesure.

De préférence, la tête de préhension comprend une surface cylindrique interne apte à entourer le premier élément lors de son raccordement avec le deuxième élément, le logement formant un trou dans la tête de préhension débouchant sur la surface interne cylindrique.

D'autres caractéristiques et avantages de l'invention apparaîtront à la lumière de la description qui suit, faite en référence aux dessins annexés dans lesquels :

- la figure 1 illustre un dispositif de contrôle d'un joint fileté selon le procédé de l'invention ;
- la figure 2A illustre de façon schématique, dans une vue en coupe longitudinale, une partie d'un assemblage de deux joints filetés disposés symétriquement ;
- la figure 2B est un schéma simplifié de l'assemblage de la figure 2A montrant une partie du dispositif de contrôle de la figure 1 ;
- la figure 3 représente une vue en perspective partiellement arrachée du dispositif de guidage de type « stabbing guide » pour la mise en oeuvre du procédé selon l'invention ;
- la figure 4 représente une vue en coupe du dispositif de la figure 3;
- les figures 5 à 7 représentent des courbes de variation d'une caractéristique dimensionnelle en fonction du temps.

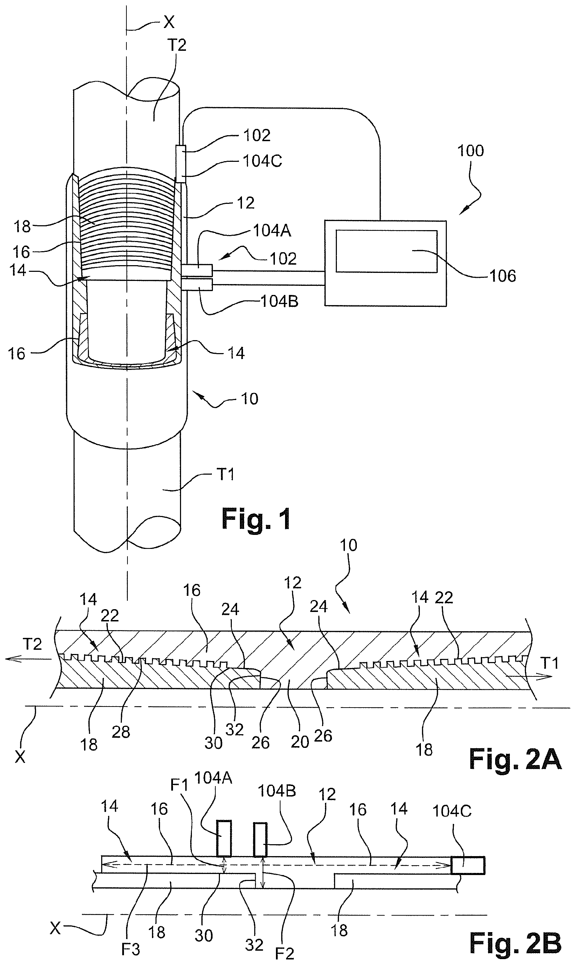

On a représenté de façon schématique sur la figure 1 un dispositif de contrôle pour la mise en oeuvre d'un procédé selon l'invention de contrôle d'un état de vissage d'un joint fileté d'un assemblage tubulaire. Le dispositif porte la référence générale 100 et l'assemblage tubulaire porte la référence 10.

Comme cela est illustré sur la figure 1, l'assemblage tubulaire 10 est de type manchonné. L'assemblage 10 comprend un manchon de raccordement 12 de deux tubes de grande longueur T1 et T2 d'axe de révolution X et définit des premier et deuxième joints filetés 14 symétriques. On ne décrira par la suite qu'un seul des deux joints filetés, par exemple le joint fileté 14 formé par le manchon 12 et le tube T2.

Par tube « de grande longueur », on entend des tubes de plusieurs mètres de longueur, par exemple d'environ dix mètres de longueur.

De façon classique, le joint fileté 14 comprend un premier élément tubulaire fileté 16 de type femelle et un deuxième élément tubulaire fileté 18 de type mâle. Dans le cas de l'exemple, le premier élément tubulaire fileté femelle 16 appartient au manchon de raccordement 12 de type femelle/femelle et l'élément fileté mâle 18 appartient à une extrémité du tube de grande longueur T2.

Dans une variante non illustrée sur les figures, l'élément femelle 16 et l'élément mâle 18 peuvent également appartenir chacun à une extrémité d'un tube « de grande longueur ». Dans ce cas, on parle de « joint intégral ».

De préférence, les tubes T1 et T2 peuvent être réalisés en toutes sortes d'aciers non alliés, faiblement alliés ou fortement alliés, voire en alliages ferreux ou non ferreux pour s'adapter aux différentes conditions de service : niveau de sollicitation mécanique, caractère corrosif du fluide intérieur ou extérieur aux tubes.

On a représenté sur **la figure 2A** une vue en coupe des éléments tubulaires de **la figure 1**. Comme cela est visible sur cette figure, les éléments filetés mâles 18 sont respectivement assemblés par vissage dans les éléments filetés femelles 16 du manchon de raccordement 12 pour constituer deux joints filetés symétriques 14 réunis par un talon 20. Ce talon 20 a en général quelques centimètres de longueur. De préférence, le talon 20 du manchon 12 possède un diamètre intérieur sensiblement identique à celui des tubes T1 et T2 de sorte que l'écoulement du fluide circulant intérieurement n'est pas perturbé.

Comme cela est illustré sur **la figure 2A**, l'élément fileté femelle 16 comprend intérieurement un filetage femelle 22 et une partie non filetée s'étendant entre le filetage 22 et le talon 20. De préférence, l'élément fileté femelle 16 comprend également une portée d'étanchéité 24 et une butée d'épaulement 26. Ainsi, la partie non filetée comprend notamment une surface annulaire d'orientation sensiblement transversale de butée formant l'épaulement 26 à l'extrémité du talon 20 et une surface conique de portée à la suite de l'épaulement formant la portée d'étanchéité 24.

De même, l'élément fileté mâle 18 comprend de préférence une portée d'étanchéité 30 et une butée d'épaulement 32. Tout comme pour l'élément fileté femelle, la portée d'étanchéité s'étend après le filetage mâle 28 dans une partie non filetée de l'élément mâle 18. Cette partie non filetée comprend une surface annulaire d'orientation sensiblement radiale de butée formant l'épaulement mâle 32 et une surface conique de portée à la suite de l'épaulement formant portée d'étanchéité 30.

Après vissage complet du filetage mâle 28 dans le filetage femelle 22, les surfaces de butées mâle 32 et femelle 26 sont en appui l'une contre l'autre tandis que les surfaces de portée mâle 30 et femelle 24 interfèrent radialement et sont de ce fait sous pression de contact métal à métal. Ces surfaces de portée constituent ainsi des portées d'étanchéité qui rendent le joint fileté étanche même pour des pressions de fluide intérieures ou extérieures élevées et pour des sollicitations diverses (traction axiale, compression axiale, flexion, torsion...).

On a également représenté sur **cette figure 1** un dispositif de contrôle 100 d'un état de vissage du joint fileté tubulaire. Ce dispositif 100 comprend selon l'invention des moyens 102 de mesure d'une caractéristique dimensionnelle de l'un des premier ou deuxième éléments tubulaires. Dans cet exemple, comme cela est illustré sur **la figure 1**, les moyens 102 sont agencés pour mesurer une caractéristique dimensionnelle de l'élément fileté tubulaire femelle 16. Bien entendu, dans une variante non illustrée, les moyens 102 peuvent être également agencés pour mesurer une caractéristique dimensionnelle de l'élément fileté tubulaire mâle.

Ces moyens de mesure 102 comprennent de préférence au moins une unité de mesure de la caractéristique dimensionnelle. De préférence et comme cela est illustré, les moyens de mesure 102 comprennent trois unités de mesure 104A, 104B et 104C respectivement de première, deuxième et troisième caractéristiques dimensionnelles. De préférence, chaque unité de mesure comprend un transducteur ultrasonore. Le transducteur ultrasonore comprend de façon classique un émetteur et un récepteur d'onde ultrasonore.

Par exemple, l'émetteur et le récepteur sont situés dans un même boîtier. De façon classique, l'émetteur émet un train d'ondes qui va se réfléchir sur l'objet à détecter et ensuite revenir au récepteur. Le temps « T » mis pour parcourir un aller-retour permet de déterminer la distance « d » de l'objet par rapport à la source (le transducteur) selon l'équation :

$$d = v \times T$$

Dans cet exemple, le signal ultrasonore est émis à l'intérieur du corps de l'élément tubulaire fileté et la durée de propagation T de ce signal aller-retour est analysée. Dans cet exemple, $v$ est la vitesse du son dans le matériau constituant les éléments tubulaires et l'objet à détecter (c'est-à-dire l'interface de réflexion de l'onde ultrasonore) est une interface tube/air.

Par ailleurs, de préférence, chaque transducteur 104 est agencé contre la surface tubulaire externe de l'élément fileté femelle 16. Par exemple, le boîtier du transducteur comprend une surface aimantée apte à se fixer contre la surface tubulaire de l'élément femelle.

Dans l'exemple décrit, les première, deuxième et troisième caractéristiques dimensionnelles sont représentées schématiquement chacune par une flèche à double sens (**figure 2B**).

Plus précisément, dans cet exemple, la première caractéristique correspond à une épaisseur selon une direction prédéfinie sensiblement radiale dans une portion de l'élément femelle 16 comprenant la portée d'étanchéité 24 (flèche référencée F1) et la deuxième caractéristique dimensionnelle correspond à une épaisseur selon la même direction radiale mais dans une portion de l'élément 16 comprenant la butée 26 (flèche référencée F2). En effet, la portée 24 et la butée d'épaulement 26 sont déformées au cours du vissage de façon caractéristique comme cela a été constaté par les inventeurs. La variation de la caractéristique dimensionnelle correspond à des allongements et/ou rétrécissements de l'élément femelle selon la direction prédéfinie.

La troisième caractéristique dimensionnelle correspond à une longueur selon une direction prédéfinie sensiblement axiale de l'élément fileté 16 (flèche référencée F3). De la même façon, l'élément fileté femelle 16 est lors du vissage déformé dans le sens de sa longueur de façon caractéristique. De préférence, cette troisième caractéristique correspond à la longueur totale du manchon comprenant l'élément femelle dans la partie supérieure de cet élément, c'est-à-dire la partie la plus longue s'étendant axialement au-dessus du talon de l'élément femelle.

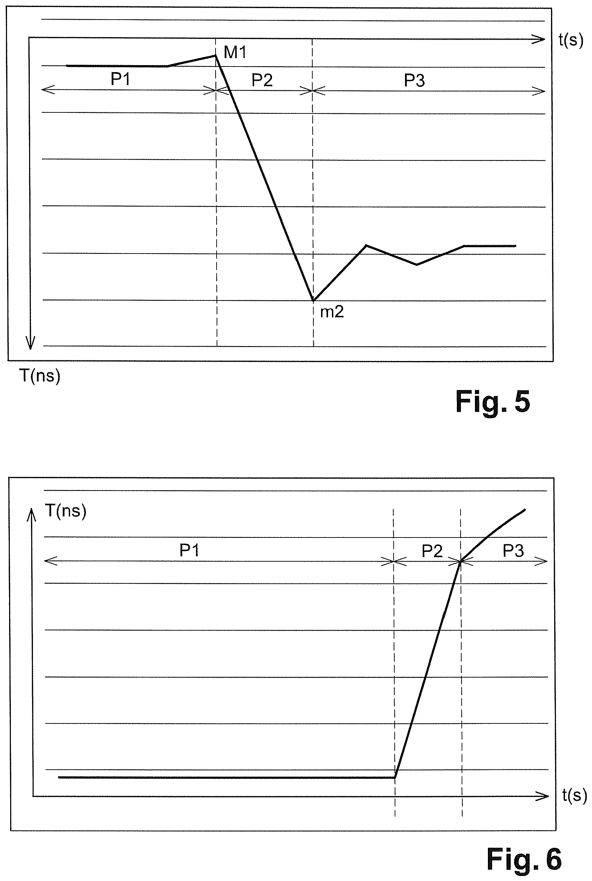

Par ailleurs, on a représenté les courbes de variation de la mesure des trois caractéristiques dimensionnelles de l'élément fileté femelle respectivement sur **les figures 5, 6 et 7**. Ces courbes représentent l'évolution de la durée T de propagation aller-retour du signal ultrasonore (en nanosecondes (ns)) en fonction du temps t (en secondes (s)).

**La figure 5** représente ainsi la variation temporelle de la première caractéristique dimensionnelle mesurée par le transducteur 104A au niveau de la portée d'étanchéité. Cette courbe présente tout d'abord une partie horizontale puis la courbe varie lentement avec une pente positive jusqu'à un maximum « M1 » (période P1). La courbe présente un point de changement de pente brutal et la courbe varie très rapidement avec une pente négative jusqu'à un minimum « m2» (période P2). La courbe présente ensuite une troisième période P3 comprenant des rebonds.

D'un point de vue physique, la période P1 identifiée correspond à un allongement radial de l'élément femelle 16 au niveau de sa portée d'étanchéité 24 (P1) du fait de l'introduction de l'élément mâle 18 dans l'élément femelle 16 qui va provoquer une compression axiale et donc un léger gonflement radial de l'élément femelle 16. Cet allongement a donc pour conséquence une augmentation de la durée aller-retour de propagation du signal. La deuxième période P2 est amorcée lorsque les surfaces d'étanchéité 24 et 30 des éléments mâle 18 et femelle 16 entrent en contact : à ce moment l'épaisseur radiale au niveau de la surface d'étanchéité se réduit rapidement. La troisième période P3 correspond à l'accostage des butées : à ce moment l'épaisseur radiale au niveau de la surface d'étanchéité 24 augmente à nouveau du fait de la compression axiale du manchon par l'élément tubulaire mâle.

**La figure 6** représente la variation de la deuxième caractéristique dimensionnelle en fonction du temps et donc au cours du vissage mesurée par le transducteur 104B. Cette courbe présente également trois périodes P1 à P3 : la courbe présente ainsi tout d'abord une pente nulle (P1) puis la courbe varie très rapidement (P2) avec une pente positive puis plus lentement (P3).

D'un point de vue physique, la première période P1 correspond à une absence de contact entre les deux butées d'épaulement mâle 32 et femelle 26 et aucune déformation de cette portion n'est apparente, la durée de propagation du signal est constant. La deuxième période P2 correspond à un allongement de l'épaisseur au niveau de la butée femelle, ceci est lié à la mise en compression par l'élément mâle 18 de l'élément femelle 16 qui a tendance à déformer le talon de l'élément femelle 16 dans le sens radial. Enfin, la troisième période P3 présentant une pente plus faible correspond à un début de plastification des butées 32 et 26.

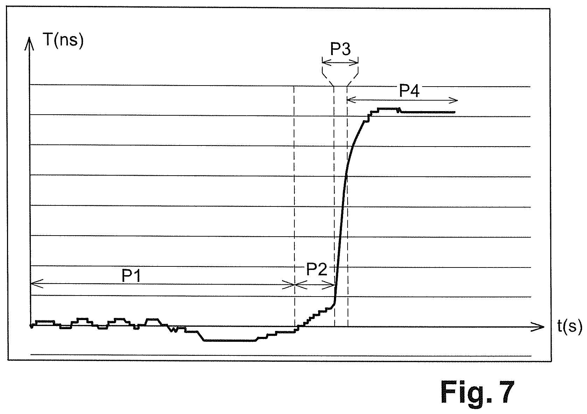

**La figure 7** représente la variation temporelle de la troisième caractéristique mesurée par le transducteur 104C. Cette courbe présente quatre périodes P1 à P4. La première période P1 présente une pente quasinulle avec un bruit de fond. La deuxième période P2 présente une pente positive puis la troisième période P3 correspond à une variation sensiblement linéaire brutale de la courbe jusqu'à une période P4 correspondant à une variation non linéaire.

D'un point de vue physique, la période P1 montre une déformation irrégulière dans le sens de la longueur de l'élément fileté. Ceci peut s'expliquer par le fait que seuls les filetages sont en contact dans cette période. La déformation a lieu essentiellement dans le sens radial. Le passage de la période P1 à la période P2 correspond à la mise en contact des portées d'étanchéité. Ceci provoque un léger allongement de l'élément femelle. Lors du passage de la période P2 à la période P3, les butées viennent en contact. La compression des butées l'une sur l'autre va avoir pour effet d'entraîner un allongement très caractéristique de l'élément femelle dans le sens axial. Cet allongement a lieu dans le domaine d'élasticité de l'élément femelle ce qui explique une portion de courbe dans la période P3 sensiblement linéaire. Enfin, la déformation de l'élément femelle 16 atteint la limite d'élasticité du matériau le constituant et le comportement de la courbe devient non linéaire dans la quatrième période P4.

Ainsi, il est possible d'établir une correspondance entre un changement de pente de la courbe de variation et un état de vissage du joint fileté. Par « état de vissage du joint fileté », on comprendra principalement un état choisi parmi les états suivants : engagement des filetages, mise en contact des butées, mise en contact des portées d'étanchéité, début de plastification. Toutefois, d'autres états de vissage peuvent être identifiés dans ces courbes de variation sans sortir du cadre de l'invention.

De préférence, le dispositif 100 comprend également des moyens d'analyse 106 de la courbe de variation mesurée. Ces moyens d'analyse 106 sont aptes à repérer dans le profil de variation de la caractéristique dimensionnelle au moins une zone de changement de pente et d'établir une correspondance entre cette zone et un état de vissage du joint fileté.

De préférence, pour établir une correspondance entre ces différentes zones de changement de pente et un état de vissage du joint fileté, un modèle de profil de variation est réalisé au moyen d'une méthode mathématique, par exemple la méthode des éléments finis, et les moyens d'analyse sont aptes à comparer le profil de variation mesuré et le modèle de profil.

Par ailleurs, par exemple, l'installation de vissage comprend une clé de vissage (non représentée). Ainsi, les joints filetés sont généralement vissés en position à l'aide de machines mécaniques ou hydrauliques dites "clés de vissage" qui sont aptes à développer des couples importants puisqu'il faut visser le joint fileté audelà de l'accostage des surfaces de butée axiale.

Dans l'art antérieur, les clés s'arrêtent lorsqu'un couple de vissage donné est atteint (couple nominal). Néanmoins compte tenu de l'inertie de la clé, le couple réel obtenu peut être décalé par rapport au couple nominal désiré. Ce décalage dépend de nombreux facteurs et peut être réduit en diminuant la vitesse de vissage, ce qui nuit à la productivité du vissage.

De préférence, le dispositif 100 comprend des moyens de pilotage (non représentés) de l'arrêt du vissage du joint en fonction de la mesure de la caractéristique dimensionnelle. De préférence, les moyens pilotent la clé de vissage du joint en fonction d'une valeur prédéfinie atteinte par la caractéristique dimensionnelle, par exemple fournie par les moyens d'analyse 106 précédemment décrits. Ceci permet d'obtenir une grande fiabilité dans le contrôle du vissage permettant d'éviter tout serrage excessif du joint tout en garantissant une étanchéité suffisante. De façon avantageuse, l'asservissement du vissage en fonction d'une mesure d'élongation ou de rétrécissement d'une partie du joint permet de tenir compte des caractéristiques propres au joint considéré. Ainsi, ceci permet de s'affranchir des critères empiriques classiquement utilisés dans le domaine et ne tenant pas compte des particularités propres à chaque joint.

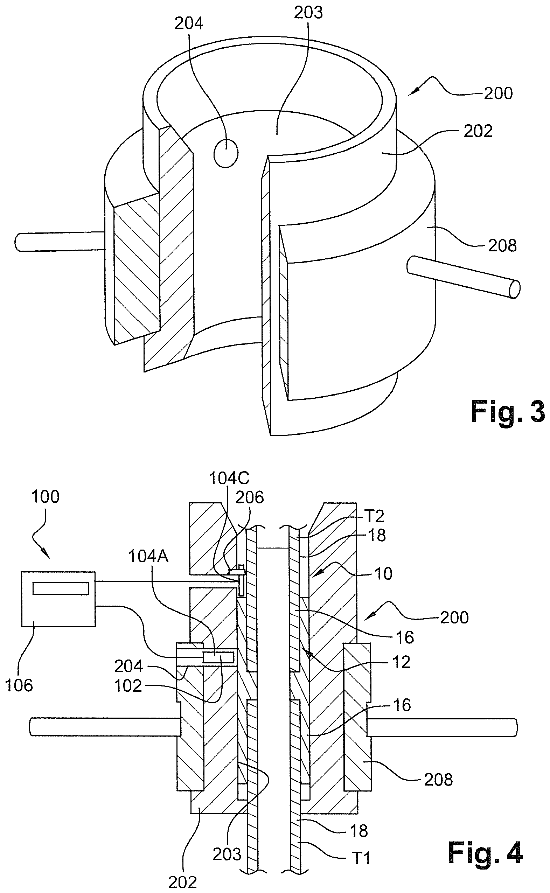

On a représenté sur **les figures 3 et 4**, le dispositif de contrôle 100 selon un mode particulier de réalisation de l'invention. Ce dispositif de contrôle 100 est mis en place dans un dispositif 200 de guidage d'un premier tube fileté, par exemple l'élément tubulaire femelle 16 lors de son raccordement par vissage avec un deuxième tube fileté, par exemple l'élément tubulaire mâle 18.

Un tel dispositif de guidage 200 est plus couramment désigné selon la terminologie anglo-saxonne par l'expression « stabbing guide ». Ce dispositif 200 comprend une tête de préhension 202 du premier tube. Les moyens de mesure de la caractéristique dimensionnelle sont agencés de préférence au moins partiellement dans la tête de préhension 202. Ainsi, on a représenté sur la **figure 4**, deux unités de mesure 104 comprenant des transducteurs ultrasonores 104A et 104C, qui sont positionnées dans la tête de préhension 202 de manière à être en contact ou à proximité de l'élément tubulaire femelle. De préférence, les moyens de mesure 102 sont logés dans la tête de préhension 202 comme illustré sur **la figure 3**. Dans l'exemple illustré, une cavité 204 est ménagée à l'intérieur de la tête de préhension pour permettre le logement du transducteur 104A. Par ailleurs, un support 206 est par exemple fixé à la tête de préhension pour permettre de maintenir en position le transducteur 104C. Par exemple, le support comprend un système de type à bride et à ressort.

Le dispositif 200 comprend par ailleurs de façon classique un collier de serrage 208 apte à enserrer la tête de préhension 202.

On va maintenant décrire les principales étapes d'un procédé de contrôle selon l'invention en se fondant sur **les figures 1 à 7** précédemment décrites.

Au préalable et en général pour former la connexion illustrée sur **la figure 1**, on pré-assemble le premier tube mâle T1 au manchon 12. Cette étape peut être par exemple réalisée en usine au préalable. L'ensemble comprenant le manchon 12 et le premier tube mâle T1 forme ainsi un premier joint fileté 14 pré-assemblé en usine puis transporté par exemple jusqu'à une plate-forme pétrolière (non représentée).

Le premier joint 14 est alors par exemple positionné verticalement sur la plate-forme pétrolière. Ce premier joint 14 est dans l'exemple décrit maintenu en position verticale au moyen du dispositif de guidage 200 ou « stabbing guide », ce dispositif le maintenant au moyen de sa tête de préhension 202 par le manchon 12. Ainsi, dans cet exemple illustré, le manchon 12 présente une extrémité femelle libre 16 pour son raccordement avec l'une des extrémités mâles 18 du deuxième tube mâle T2.

Le dispositif de guidage 200 comprend dans ce mode de réalisation particulier un logement pour les moyens de mesure 102 des caractéristiques dimensionnelles de l'élément fileté au cours du vissage. Toutefois, dans une variante, les moyens de mesure 102 peuvent être disposés de toute autre façon permettant la mise en oeuvre du procédé de contrôle.

De préférence, la tête de préhension 202 comprend une surface cylindrique interne 203 apte à entourer le premier élément 16 lors de son raccordement avec le deuxième élément 18. De préférence, le logement forme un trou 204 dans la tête de préhension 202 débouchant sur la surface interne cylindrique 203. Ainsi, lorsque les moyens de mesure 102 sont insérés à l'intérieur du trou, ils sont directement en contact avec le premier élément tubulaire permettant ainsi d'effectuer des mesures. Bien entendu, la position du trou formant logement sera judicieusement choisie pour permettre par exemple la mesure

Ainsi, lors de l'insertion de l'ensemble 10 comprenant le manchon 12 de raccordement et le premier tube T1, les transducteurs ultrasonores 104 sont positionnés relativement au manchon de raccordement 12 de telle manière qu'ils sont aptes à mesurer les première à troisième caractéristiques dimensionnelles.

Le déroulement des étapes de contrôle est détaillé ci-dessous. Au cours du vissage, les moyens 102 mesurent une variation temporelle d'une caractéristique dimensionnelle de l'élément femelle 16 selon une direction prédéfinie, cet élément 16 étant préalablement disposé à l'intérieur du dispositif de guidage 200.

Dans cet exemple, on mesure la variation de trois caractéristiques dimensionnelles de l'élément femelle :

- la première caractéristique correspond à l'épaisseur de l'élément femelle 16 selon une direction radiale au niveau de la surface d'étanchéité ;
- la deuxième caractéristique correspond à l'épaisseur de l'élément femelle 16 selon une direction radiale au niveau de la surface de butée ;
- la troisième caractéristique correspond à la longueur de l'élément fileté femelle 16 selon une direction axiale dans sa partie radiale supérieure, c'est-à-dire au dessus des surfaces de butée.

Au cours d'une étape suivante, les moyens 106 analysent les courbes représentatives de ces variations temporelles. Ainsi, la variation temporelle de ces trois caractéristiques dimensionnelles est représentée respectivement par les courbes des figures 5 à 7. Cette analyse peut bien entendu être réalisée également directement par un opérateur de la plate-forme.

Puis, les moyens 106 repèrent dans le profil de variation de la caractéristique dimensionnelle au moins une zone de changement de pente et établissent une correspondance entre cette zone et un état de vissage du joint fileté. Cette étape peut être réalisée par les moyens d'analyse mais également par un opérateur de la plate-forme.

De préférence, pour établir cette correspondance, les moyens d'analyse 106 comparent un modèle de profil de variation par une méthode mathématique, par exemple la méthode des éléments finis. Puis, les moyens d'analyse 106 comparent le profil de variation mesuré avec le modèle de profil pour repérer les zones caractéristiques du profil de variation mesuré.

De préférence et dans cet exemple, l'installation comprend des moyens de pilotage de l'arrêt du vissage du joint en fonction du résultat de l'analyse de la variation de la caractéristique dimensionnelle. Par exemple, les moyens pilotent directement une clé de vissage. Dès lors qu'un état de vissage prédéfini est détecté, le vissage est arrêté.

Bien entendu, d'autres modes de réalisation sont envisageables sans sortir du cadre de l'invention. Ainsi, diverses modifications peuvent être apportées par l'homme du métier à l'invention qui vient d'être décrite à titre d'exemple.

## Revendications

1. Procédé de contrôle d'un état de vissage d'un joint fileté tubulaire (14), le joint fileté (14) comprenant un élément tubulaire fileté mâle (18) et un élément tubulaire fileté femelle (16), **caractérisé en ce que**, au cours du vissage de l'élément fileté mâle (18) dans l'élément fileté femelle (16), on mesure une variation temporelle d'une caractéristique dimensionnelle de l'un au moins des éléments (16, 18) selon une direction prédéfinie et on analyse la variation temporelle de la caractéristique pour déterminer un état de vissage du joint fileté (14).

2. Procédé selon la revendication précédente, dans lequel on mesure cette caractéristique dimensionnelle au moyen d'un signal ultrasonore.

3. Procédé selon la revendication précédente, dans lequel, pour mesurer la caractéristique dimensionnelle, on émet le signal ultrasonore dans le corps de l'élément (16) et on analyse la durée de propagation aller-retour de ce signal selon la direction prédéfinie.

4. Procédé selon l'une quelconque des revendications précédentes, dans lequel la caractéristique dimensionnelle représente une épaisseur dans une direction prédéfinie sensiblement radiale ou une longueur dans une direction prédéfinie sensiblement axiale de l'élément fileté (16).

5. Procédé selon l'une quelconque des revendications précédentes, dans lequel la caractéristique dimensionnelle est mesurée dans une portion de l'élément fileté (16) comprenant une portée d'étanchéité (24) et/ou une butée d'épaulement (26).

6. Procédé selon l'une quelconque des revendications précédentes, dans lequel la variation de la caractéristique dimensionnelle correspond à des allongements et/ou rétrécissements de l'élément (16) selon la direction prédéfinie.

7. Procédé selon l'une quelconque des revendications précédentes, dans lequel on repère dans le profil de variation de la caractéristique dimensionnelle au moins une zone de changement de pente et on établit une correspondance entre cette zone et un état de vissage du joint fileté (16).

8. Procédé selon la revendication précédente, dans lequel pour établir cette correspondance, on modélise un profil de variation par une méthode mathématique, par exemple la méthode des éléments finis et on compare le profil de variation mesuré avec le modèle de profil.

9. Procédé selon l'une quelconque des revendications précédentes, dans lequel on pilote l'arrêt du vissage du joint (14) en fonction de la mesure de la caractéristique dimensionnelle.

10. Procédé d'assemblage d'un joint, dans lequel on assemble par vissage un élément femelle (16) et un élément mâle (18), **caractérisé en ce qu'**il met en oeuvre le procédé de contrôle selon l'une quelconque des revendications précédentes.

11. Dispositif (100) de contrôle d'un état de vissage d'un joint fileté tubulaire (14), le joint fileté (14) comprenant un élément tubulaire fileté mâle (18) et un élément tubulaire fileté femelle (16), **caractérisé en ce qu'**il comprend des moyens (102) de mesure d'une variation temporelle d'une caractéristique dimensionnelle de l'un au moins des éléments (16, 18) selon une direction prédéfinie et des moyens (106) d'analyse de la variation temporelle de la caractéristique pour déterminer un état de vissage du joint fileté (14).

12. Dispositif (100) selon la revendication précédente, comprenant des moyens de pilotage de l'arrêt du vissage du joint en fonction de la mesure de la caractéristique dimensionnelle.

13. Dispositif (100) selon la revendication 11 ou 12, dans lequel les moyens de mesure (102) comprennent au moins un transducteur ultrasonore (104A, 104B, 104C).

14. Dispositif (200) de guidage d'un premier élément tubulaire fileté (16) lors de son raccordement par vissage avec un deuxième élément tubulaire fileté (18), comprenant une tête de préhension (202) du premier élément tubulaire (16), **caractérisé en ce que** le dispositif (200) comprend un logement avec des moyens (102) de mesure d'une variation temporelle d'une caractéristique dimensionnelle du premier élément tubulaire agencés au moins partiellement dans la tête de préhension (202) afin de permettre la mise en oeuvre du procédé de contrôle selon l'une quelconque des revendications 1-10.

15. Dispositif (200) selon la revendication précédente, dans lequel, la tête de préhension (202) comprenant une surface cylindrique interne (203) apte à entourer un élément tubulaire fileté mâle (18) lors de son raccordement avec un élément tubulaire fileté femelle (16), le logement (204) formant un trou dans la tête de préhension (202) débouchant sur la surface interne cylindrique (203).

**Patentansprüche**

1. Verfahren zur Kontrolle eines Verschraubungszustands einer Rohrverbindung mit Gewinde (14), wobei die Gewindeverbindung (14) ein rohrförmiges Außengewindeelement (18) und ein rohrförmiges Innengewindeelement (16) umfasst, **dadurch gekennzeichnet, dass** im Verlauf der Verschraubung des Außengewindeelements (18) mit dem Innengewindeelement (16) eine Zeitabweichung einer Maßeigenschaft mindestens eines der Elemente (16, 18) in vorgegebene Richtung gemessen wird und die Zeitabweichung der Eigenschaft analysiert wird, um den Verschraubungszustand der Gewindeverbindung (14) zu ermitteln.

**2.** Verfahren gemäß dem vorstehenden Anspruch, bei dem diese Maßeigenschaft mittels Ultraschallsignal gemessen wird.

**3.** Verfahren gemäß dem vorstehenden Anspruch, bei dem zur Messung der Maßeigenschaft ein Ultraschallsignal in den Korpus des Elements (16) gesandt wird und die Dauer der Verbreitung dieses Signals hin und zurück gemäß der vorbestimmten Richtung analysiert wird.

**4.** Verfahren gemäß einem der vorstehenden Ansprüche, bei dem die Maßeigenschaft eine Dicke in einer im Wesentlichen radial vorgegebenen Richtung oder eine Länge in einer im Wesentlichen axial vorgegebenen Richtung des Gewindeelements (16) darstellt.

**5.** Verfahren gemäß einem der vorstehenden Ansprüche, bei dem die Maßeingenschaft in einem Abschnitt des Gewindeelements (16) gemessen wird, welcher eine Dichtfläche (24) und/oder eine Ansatzvorrichtung (26) umfasst.

**6.** Verfahren gemäß einem der vorstehenden Ansprüche, bei dem die Veränderung der Maßeigenschaft Längungen und/oder Schrumpfungen des Elements (16) in vorgegebener Richtung entspricht.

**7.** Verfahren gemäß einem der vorstehenden Ansprüche, bei dem im Veränderungsmuster der Maßeigenschaft mindestens ein Bereich mit Steigungsänderung ermittelt wird und eine Entsprechung zwischen diesem Bereich und einem Verschraubungszustand der Gewindeverbindung (16) hergestellt wird.

**8.** Verfahren gemäß dem vorstehenden Anspruch, bei dem, um diese Entsprechung zu ermitteln, ein Veränderungsmuster anhand einer mathematischen Methode modelliert wird, beispielsweise der Finite-Element-Methode und das Muster der gemessenen Veränderung mit dem Modell des Musters verglichen wird.

**9.** Verfahren nach einem der vorstehenden Ansprüche, bei dem die Beendigung der Verschraubung der Verbindung (14) je nach Messung der Maßeigenschaft gesteuert wird.

**10.** Montageverfahren einer Verbindung, bei dem durch Verschraubung ein Innenelement (16) und ein Außenelement (18) montiert werden, **dadurch gekennzeichnet, dass** das Kontrollverfahren gemäß einem der vorstehenden Ansprüche angewandt wird.

**11.** Vorrichtung (100) zur Kontrolle eines Verschraubungszustands einer Rohrverbindung mit Gewinde (14), wobei die Gewindeverbindung (14) ein rohrförmiges Außengewindeelement (18) und ein rohrförmiges Innengewindeelement (16) umfasst, **dadurch gekennzeichnet, dass** es Mittel (102) zur Messung einer Zeitabweichung einer Maßeigenschaft mindestens eines der Elemente (16, 18) in vorgegebene Richtung umfasst und Mittel (106) zur Analyse der Zeitabweichung der Eigenschaft, um einen Verschraubungszustand der Gewindeverbindung (14) zu ermitteln.

**12.** Vorrichtung (100) gemäß dem vorstehenden Anspruch, welche Mittel zur Steuerung der Beendigung der Verschraubungsvorgangs der Verbindung je nach Messung der Maßeigenschaft umfasst.

**13.** Vorrichtung (100) gemäß Anspruch 11 oder 12, bei der die Messmittel (102) mindestens einen Ultraschallumwandler (104A, 104B, 104C) umfassen.

**14.** Vorrichtung (200) zur Führung eines ersten Rohrelements mit Gewinde (16) bei dessen Verbindung durch Verschrauben mit einem zweiten Rohrelement mit Gewinde (18), welche einen Greifkopf (202) des ersten Rohrelements umfasst (16), **dadurch gekennzeichnet, dass** die Vorrichtung (200) eine Aufnahme mit Mitteln (102) zur Messung einer Zeitabweichung einer Maßeigenschaft des ersten Rohrelements umfasst, welche zumindest teilweise im Greifkopf (202) angebracht sind, um die Umsetzung des Kontrollverfahrens gemäß einem der Ansprüche 1 - 10 umzusetzen.

**15.** Vorrichtung (200) gemäß dem vorstehenden Anspruch, bei der der Greifkopf (202), der eine zylindrische Innenfläche (203) aufweist, welche dazu geeignet ist, ein Rohrelement mit Außengewinde (18) zu umgeben, wenn dieses mit einem Rohrelement mit Innengewinde (16) verbunden wird, wobei die Aufnahme (204) ein Loch im Greifkopf (202) bildet, welches zu einer zylindrischen Innenfläche (203) führt.

**Claims**

**1.** A method for monitoring a makeup state of a threaded tubular connection (14), the threaded connection (14) comprising a male threaded tubular element (18) and a female threaded tubular element (16), **characterized in that** during makeup of the male threaded element (18) into the female threaded element (16), a variation with time of a dimensional characteristic of at least one of the elements (16, 18) is measured in a pre-defined direction and the variation with time of the characteristic is analysed in order to determine a makeup state for the threaded connection (14).

2. The method as claimed in the preceding claim, in which this dimensional characteristic is measured by means of an ultrasound signal.

3. The method as claimed in the preceding claim in which, in order to measure the dimensional characteristic, the ultrasound signal is emitted into the body of the element (16) and the round trip propagation time of that signal is analysed in the pre-defined direction.

4. The method as claimed in any one of the preceding claims, in which the dimensional characteristic represents a thickness in a substantially radial pre-defined direction or a length in a substantially axial pre-defined direction of the threaded element (16).

5. The method as claimed in any one of the preceding claims, in which the dimensional characteristic is measured in a portion of the threaded element (16) comprising a sealing surface (24) and/or a shoulder abutment (26).

6. The method as claimed in any one of the preceding claims, in which the variation in the dimensional characteristic corresponds to elongations and/or contractions of the element (16) in the pre-defined direction.

7. The method as claimed in any one of the preceding claims, in which at least one zone with a change of slope is identified in the profile of the variation in the dimensional characteristic and a correspondence is established between this zone and a makeup state of the threaded connection (16).

8. The method as claimed in the preceding claim in which, in order to establish said correspondence, a profile of the variation is modelled using a mathematical method, for example the finite element method, and the measured profile of the variation is compared with the model profile.

9. The method as claimed in any one of the preceding claims, in which stopping of makeup of the connection (14) is managed as a function of the measurement of the dimensional characteristic.

10. A method for connecting a connection, in which a female element (16) and a male element (18) are connected by makeup, **characterized in that** it employs the monitoring method as claimed in any one of the preceding claims.

11. A device (100) for monitoring a makeup state of a threaded tubular connection (14), the threaded connection (14) comprising a male threaded tubular element (18) and a female threaded tubular element (16), **characterized in that** it comprises means (102) for measuring a variation with time of a dimensional characteristic of at least one of the elements (16, 18) in a pre-defined direction and means (106) for analysing the variation with time of the characteristic in order to determine a makeup state of the threaded connection (14).

12. The device (100) as claimed in the preceding claim, comprising means for managing stopping of the makeup of the connection as a function of the measurement of the dimensional characteristic.

13. The device (100) as claimed in claim 11 or claim 12, in which the measuring means (102) comprise at least one ultrasound transducer (104A, 104B, 104C).

14. A device (200) for guiding a first threaded tubular element (16) during connection thereof by makeup with a second threaded tubular element (18), comprising a gripping head (202) for the first tubular element (16), **characterized in that** the device (200) comprises a housing with means (102) for measuring a variation with time of a dimensional characteristic of the first tubular element arranged at least partially in the gripping head (202) in order to allow the monitoring method in accordance with any one of claims 1 to 10.

15. The device (200) as claimed in the preceding claim, in which the gripping head (202) comprises an internal cylindrical surface (203) which can surround a male threaded element (18) when it is being connected with the second element (16), the housing (204) forming a hole in the gripping head (202) opening onto the internal cylindrical surface (203).

Fig. 1

Fig. 2A

Fig. 2B

Fig. 3

Fig. 4

Fig. 5

Fig. 6

Fig. 7

**RÉFÉRENCES CITÉES DANS LA DESCRIPTION**

**Documents brevets cités dans la description**

- JP 6221475 A

- WO 2008029957 A